(19) Europäisches Patentamt
European Patent Office
Office européen des brevets

(11) **EP 1 248 344 B1**

(12) **EUROPÄISCHE PATENTSCHRIFT**

(45) Veröffentlichungstag und Bekanntmachung des Hinweises auf die Patenterteilung:
**28.06.2006 Patentblatt 2006/26**

(51) Int Cl.:
**H02J 3/01** (2006.01)

(21) Anmeldenummer: **02007520.6**

(22) Anmeldetag: **02.04.2002**

(54) **Reaktanz-Zweipolschaltung für nichtlineare Verbraucher**

Bipolar reactance circuit for nonlinear loads

Circuit réactance bipolaire pour charges non-lineaires

(84) Benannte Vertragsstaaten:
**AT BE CH CY DE DK ES FI FR GB GR IE IT LI LU MC NL PT SE TR**

(30) Priorität: **05.04.2001 DE 20106008 U**

(43) Veröffentlichungstag der Anmeldung:
**09.10.2002 Patentblatt 2002/41**

(73) Patentinhaber: **Eltroplan-Revcon Elektrotechnische Anlagen GmbH 59199 Bönen (DE)**

(72) Erfinder: **Krause, Siegfried Dipl.-Ing. 44137 Dortmund (DE)**

(74) Vertreter: **Zeitler, Giselher et al Zeitler - Volpert - Kandlbinder Patentanwälte Herrnstrasse 44 80539 München (DE)**

(56) Entgegenhaltungen:
**WO-A-00/62396          DE-A- 4 219 214**

**Beschreibung**

Die Erfindung betrifft eine Schaltungsanordnung zur Oberschwingungskompensation für mehrphasige Versorgungsnetze mit sinusförmiger Netzspannung gemäß dem Anspruch 1.

Nichtlineare Verbraucher beziehen aus einem Versorgungsnetz mit sinusförmigen Versorgungsspannungen bzw. -strömen nichtsinusförmige Verbraucherspannungen bzw. -ströme. Diese Abweichungen des Stromes von der Sinusform führen in Versorgungsnetzen zu Verzerrungen der Netzspannung. Die Verzerrungen der Netzspannung verursachen zusätzliche Verluste und Funktionsstörungen bei anderen Verbrauchern, die an diesem Versorgungsnetz betrieben werden. Einen hohen Anteil an nichtlinearen Verbrauchern in den Versorgungsnetzen stellen dreiphasige Gleichrichter- und Wechselrichterschaltungen dar. Die am häufigsten eingesetzte Gleichrichterschaltung ist der ungesteuerte Gleichrichter in B6-Schaltung.

Die nicht sinusförmigen Spannungen bzw. Ströme können mittels Fourier-Reihen in sinusförmige Größen zerlegt werden, die aus einer Grundschwingung, wie z.B. f = 50 Hz, und Oberschwingungen der Frequenz n·f bestehen. Ein Bewertungskriterium für die Abweichungen einer verzerrten Stromform von der Sinusform stellt der "THD" dar. Der Wert THD (Total Harmonic Distortion) beschreibt ein Gesamt-Oberschwingungsverhältnis v und ist definiert als

$$v = \sqrt{\sum_{n=2}^{\infty} V_n^2}$$

wobei

$$V_n = \frac{U_n}{U_1}$$

ist, mit $U_n$ = Effektivwert jeder Oberschwingung n und
$U_1$ = Effeltivwert der Grundschwingung.

Die durch die Stromoberschwingungen der Verbraucherspannung bzw. des Verbraucherstroms verursachten Auswirkungen auf das speisende Netz werden als Netzrückwirkungen bezeichnet. Typische Netzrückwirkungen sind: Erhöhung der Verlustleistung im Versorgungsnetz und bei anderen Verbrauchern; Spannungsabfälle und Kommutierungseinbrüche; Verformung der Netzspannung; Resonanzerscheinungen im Netz; Störungen bei benachbarten Baugruppen und Verbrauchern, ggf. durch die vorgenannten Resonanzerscheinungen.

Zu den nichtlinearen Verbrauchern zählen z.B. Drosseln, Transformatoren und leistungselektronische Baugruppen, wie Gleichrichter, Wechselrichter, Drehstromsteller usw. Der vermehrte Einsatz und die immer größeren Leistungen von leistungselektronischen Baugruppen haben dazu geführt, dass Normen erarbeitet wurden oder in Vorbereitung sind, die die zulässigen Stromoberschwingungen in bezug auf bestimmte Versorgungsnetze spezifizieren, mit dem Ziel, die Netzrückwirkungen zu begrenzen.

Bei der Reduzierung von Stromoberschwingungen unterscheidet man prinzipiell netzseitige und gerätetechnische Maßnahmen. Zu den netzseitigen Maßnahmen zählen z.B. Saugdrosselkreise und aktive Oberschwingungskompensation. Bei den gerätetechnischen Maßnahmen ist beispielsweise die Erhöhung der Pulszahl von Gleich- und Wechselrichterschaltungen bekannt (12-pulsige Gleichrichterschaltungen).

WO-A-0062396 offenbart eine Vorrichtung zum Vermindern von harmonischen Schwingungen, welches zwischen ein Energieversorgungssystem und einen Verbraucher geschaltet ist. Die Vorrichtung umfasst eine den Fluss umschaltende Drosselspule mit mehreren Leftungswicklungen, wobei eine Kondensatorbank zwischen den Leitungswicklungen der Drosselspule vorgesehen ist. Wenigstens eine Leitungswicklung ist auf einem Kern in eine erste Polarität orientiert und wenigstens eine Kompensationswicklung ist auf dem Kern in die entgegengesetzte Polarität orientiert und zwischen den Ausgang der ersten Wicklung und der Last geschaltet. Die von der Leitungswicklung und der Kompensationswicklung erzeugten entgegengesetzten Flüsse heben sich auf und vermindern dadurch die Durchgangsreaktanz der Vorrichtung zwischen der Last und dem Versorgungssystem. Der Eingang einer querverbindenen Schaltung mit einem Kondensator ist zwischen die Leitungswicklung und die Kompensationswicklung geschaltet. Die Reaktanz über die querverbindende Schaltung zum Mittelleiter (oder einer Phase) ist niedriger als die Reaktanz über die Leitungswicklung. Ströme von harmonischen Schwingungen fließen daher über die querverbindende Schaltung ab und sind in erhöhtem Maße daran gehindert, in das Energieversorgungssystem einzudringen.

DE 42 19 214 A1 offenbart eine Schaltung zur Oberschwingungskompensation, welche zwischen einen Stromrichter und ein Wechselspannungsnetz geschaltet ist. Diese Schaltung umfasst eine Duplexdrossel, die eine an den Stromrichter angeschlossene Primärwicklung und eine an das Wechselspannungsnetz angeschlossene, antiparallel zur Primärwicklung geschaltete Sekundärwicklung aufweist. Dabei sind die beiden Wicklungen der Duplexdrossel an einem Anzapfungspunkt zusammengeschaltet, an dem ein auf die zu dämpfende Oberwellen im Wesentlichen abgestimmter L-C-Filter angeschlossen ist, das im einphasigen System gegen Masse, im mehrphasigen System gegen dessen Mittelpunkt oder im dreiphasigen System im Dreieck geschaltet ist.

Beide vorgenannten System beruhen in erster Linie au dem Effekt von einer in die Leitung einer Phase eingeschleiften Spule mit zwei entgegengesetzten Wicklungen die in Serie geschaltet auf einem gemeinsamen Kern angeordnet entgegengesetzte, einander aufhebende Flüsse erzeugen, so dass es jeweils zu einer Verminderung der Reaktanz kommt. Ausgehend von dieser reaktanzvermindernden Spule werden über einen L-C-Filter in jeder Phase jeweilige Ströme von Oberschwingungen abgeleitet. Die Leistungsfähigkeit dieser Systeme ist jedoch nicht für alle Anwendungen ausreichend. Außerdem ist die Spule mit entgegengesetzten, in Serie geschalteten Wicklungen kostenintensiv und aufwändig in der Herstellung.

Der Erfindung liegt die Aufgabe zugrunde, eine verbesserte Oberschwingungskompensation zur Verfügung zu stellen, welche bei einfachem Aufbau dem vermehrten Einsatz von leistungselektronischen Baugruppen mit einer entsprechend hohen Dynamik Rechnung trägt und auch Oberschwingungen mit einer derartig hohen Dynamik wirkungsvoll kompensiert.

Diese Aufgabe wird durch eine Schaltungsanordnung der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es bei der Schaltungsanordnung der o.g. Art erfindungsgemäß vorgesehen, dass die ersten Induktivitäten zwei in Reihe geschaltete Drosselspulen aufweisen und dass zwischen den beiden Drosselspulen jeder Phase jeweils eine zweite Kapazität angeschlossen ist, wobei die jeweiligen von den Drosselspulen abgewandten Enden der zweiten Kapazitäten miteinander verbunden sind.

Dies hat den Vorteil, dass sich in Abhängigkeit von Verzerrungen des Verbraucherstroms, welche von dem nichtlinearen Verbraucher erzeugt werden, Reaktanzzweipolströme über die ersten Induktivitäten und Kapazitäten ergeben, welche bei entsprechender Dimensionierung der Induktivitäten und Kapazitäten die Verzerrungen bzw. Oberschwingungen kompensieren. Die Schaltung zeichnet sich durch einen besonders einfachen Aufbau aus, wodurch sie sich einfach und problemlos an verschiedene Netzfrequenzen, wie beispielsweise 50 Hz oder 60 Hz, anpassen lässt und sich im Spannungsbereich von Kleinspannung bis Mittelspannung dimensionieren lässt.

Beispielsweise ist in jeder Phase eine Drosselspule vor dem Verbraucher eingeschleift, wobei die ersten Induktivitäten jeweils zwischen der Drosselspule und dem Verbraucher mit der jeweiligen Phase verbunden sind. Der Verbraucher ist beispielsweise ein gesteuerter oder ungesteuerte Wechselrichter oder ein gesteuerter oder ungesteuerte einphasiger Gleichrichter, insbesondere ein B2-Gleichrichter, ein gesteuerter oder ungesteuerte dreiphasiger Gleichrichter, insbesondere ein M6-, M3- oder B6-Gleichrichter, ein gesteuerter oder ungesteuerte höherphasiger Gleichrichter, insbesondere ein M12-, M18-, B12-Gleichrichter, oder ein Wechselrichter. Die Drosselspulen sind bevorzugt zu einer n-phasigen Eisenkerndrossel mit E-I-Kernschnitt zusammengefasst, wobei n der Zahl der Phasen entspricht.

Einen kostengünstigen Schaltungsaufbau erzielt man dadurch, dass die ersten Induktivitäten als wenigstens eine n-phasige Eisenkerndrossel mit E-I-Kernschnitt ausgebildet sind, wobei n der Zahl der Phasen entspricht.

Die Erfindung wird im Folgenden anhand der Zeichnung näher erläutert. Diese zeigt in:

Fig. 1        ein schematisches Schaltbild einer bevorzugten Ausführungsform einer erfindungsgemäßen Schaltungsanordnung,

Fig. 2        ein Oszillogramm des Verbraucherstromes $I_V$ und des Netzstromes $I_0$,

Fig. 3        ein Oszillogramm des Kompensationsstromes $I_1$ und des Netzstromes $I_0$,

Fig. 4        ein Oszillogramm des Verbraucherstromes $I_V$ und des Netzstromes $I_0$,

Fig. 5        ein Oszillogramm des Kompensationsstromes $I_1$ und des Netzstromes $I_0$,

Fig. 6 - 8      Tabelle, Oszillogramm und Graphik des Oberschwingungsspektrums einer B6-Gleichrichterschaltung ohne erfindungsgemäße Schaltungsanordnung bei Teillastbedingungen,

Fig. 9 - 11     Tabelle, Oszillogramm und Graphik des Oberschwingungsspektrums einer B6-Gleichrichterschaltung ohne erfindungsgemäße Schaltungsanordnung bei Vollastbedingungen,

Fig. 12 - 14    Tabelle, Oszillogramm und Graphik des Oberschwingungsspektrums einer B6-Gleichrichterschaltung mit erfindungsgemäßer Schaltungsanordnung bei Teillastbedingungen und

Fig. 15-17    Tabelle, Oszillogramm und Graphik des Oberschwingungsspektrums einer B6-Gleichrichterschaltung mit erfindungsgemäßer Schaltungsanordnung bei Vollastbedingungen,

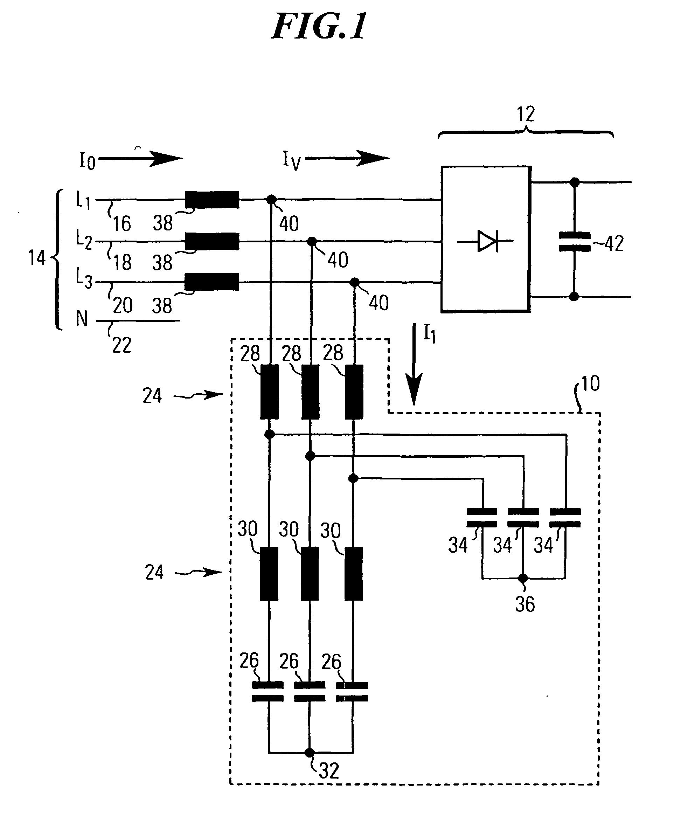

Die in der Fig. 1 beispielhaft dargestellte bevorzugte Ausführungsform einer erfindungsgemäßen Schaltungsanordnung 10 für einen nichtlinearen Verbraucher 12 an einem Versorgungsnetz 14 mit drei Phasen 16, 18, 20 sowie einem Nulleiter 22 umfasst für jede Phase 16, 18, 20 eine erste Induktivität 24 und eine erste Kapazität 26. Die erste Induktivität 24 umfasst jeweils für jede Phase 16, 18, 20 eine erste Drosselspule 28 und eine zweite Drosselspule 30. Die Drosselspulen 28, 30 sowie die erste Kapazität 26 sind in Reihe geschaltet. Die jeweilige erste Drosselspule 28 ist mit der jeweiligen Phase 16, 18, 20 verbunden, die jeweilige zweite Drosselspule 30 ist an einer Seite mit der jeweiligen ersten Drosselspule 28 und an der anderen Seite mit der jeweiligen ersten Kapazität 26 verbunden. Die ersten Kapazitäten 26 sind an den jeweiligen von den zweiten Drosselspulen abgewandten Enden miteinander am Punkt 32 verbunden.

Zwischen den ersten und zweiten Drosselspulen 28, 30 ist jeweils eine zweite Kapazität 34 angeschlossen. Auch die zweiten Kapazitäten 34 sind an ihren jeweiligen von den Drosselspulen 28, 30 abgewandten Enden an einem Punkt 36 miteinander verbunden. Aus dem Versorgungsnetz fließt der Netzstrom $I_0$ und an den Verbraucher fließt der Verbraucherstrom $I_V$.

Eingeschleift in jede Phase 16, 18, 20 sind dritte Drosselspulen 38 zwischen dem Versorgungsnetz 14 und den Anschlusspunkten 40 der ersten Drosselspulen 28.

Diese leisten ebenfalls einen Beitrag zur Wirkungsweise der erfindungsgemäßen Schaltungsanordnung 10.

Diese Schaltungsanordnung 10 bewirkt, dass den oberschwingungsbehafteten Strömen $I_V$ des nichtlinearen Verbrauchers 12 je Phase ein Kompensationsstrom bzw. Reaktanzzweipolstrom $I_1$ addiert und subtrahiert wird. Dies führt dazu, dass die dem Versorgungsnetz 14 entnommenen Ströme $I_V$ nur noch einen geringen Oberschwingungsanteil aufweisen.

In der Ausführungsform von Fig. 1 ist beispielhaft als nichtlinearer Verbraucher eine ungesteuerte B6-Gleichrichterschaltung mit einem Phasennennstrom von 35A vorgesehen, und die erfindungsgemäße Schaltungsanordnung 10 dementsprechend dimensioniert. Die erfindungsgemäße Schaltungsanordnung 10 umfasst einen Reaktanzzweipol, der pro Phase 16, 18, 20 aus drei Induktivitäten 28, 30, 38 und zwei Kapazitäten 30, 34 besteht. Daraus folgt, dass die Funktion des Blindwiderstandes in Abhängigkeit von der Frequenz 6 Pole und Nullstellen aufweist und dass der Blindwiderstand positive und negative Werte annimmt, was einer Energieaufnahme und einer Energieabgabe entspricht.

Die Kapazitätswerte der ersten und zweiten Kapazitäten 26, 34 sowie die Induktivitätswerte der ersten, zweiten und dritten Drosselspulen 28, 30, 38 sind derart dimensioniert, dass die Nullstellen und Pole der Funktion des Blindwiderstands auf das jeweilige Oberschwingungsspektrum des Verbraucherstromes $I_V$ abgestimmt sind. Nachfolgend sind lediglich beispielhaft konkrete Zahlenwerte für Induktivitäten und Kapazitäten angeben. Diese lediglich beispielhafte Dimensionierung gilt für einen Verbraucherstrom $I_V = 35A$.

| Drosselspulen 28: | Induktivität pro Phase | L = | 2,8 mH |
| | Strom pro Phase | $I_{eff}$ = | 14 A |
| Drosselspulen 30: | Induktivität pro Phase | L = | 3,7 mH |
| | Strom pro Phase | $I_{eff}$ = | 11 A |
| Kapazitäten 26: | Kapazität pro Phase | C = | 44 μF |
| Kapazitäten 34: | Kapazität pro Phase | C = | 67 μF |
| Drosselspulen 38: | Induktivität pro Phase | L = | 1,27 mH |
| | Strom pro Phase | $I_{eff}$ = | 35 A |

Die Induktivitäten 28, 30, 38 sind beispielsweise als dreiphasige Eisenkerndrosseln mit E-I-Kernschnitt ausgebildet. Diese Alternative stellt eine konstruktiv und kostenmäßig optimierte Ausführungsform für ein dreiphasiges Drosselsystem dar. Es ist allerdings auch möglich, komplexere Ausführungsformen für die Induktivitäten 28, 30, 38 einzusetzen, wie beispielsweise jeweils drei Einphasendrosseln anstelle einer Dreiphasendrossel mit E-I-Kernschnitt, sofern Bauraum und Kosten dies zulassen.

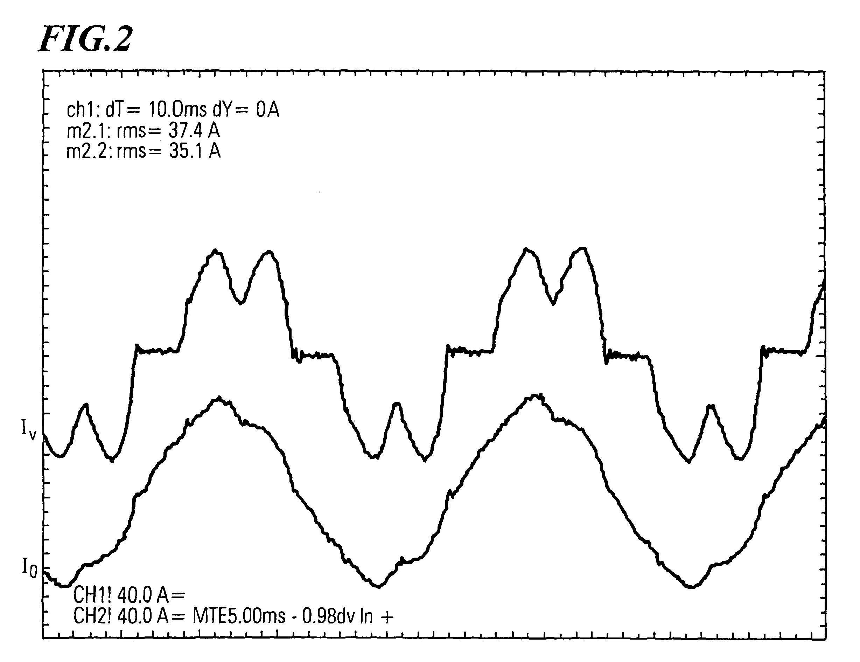

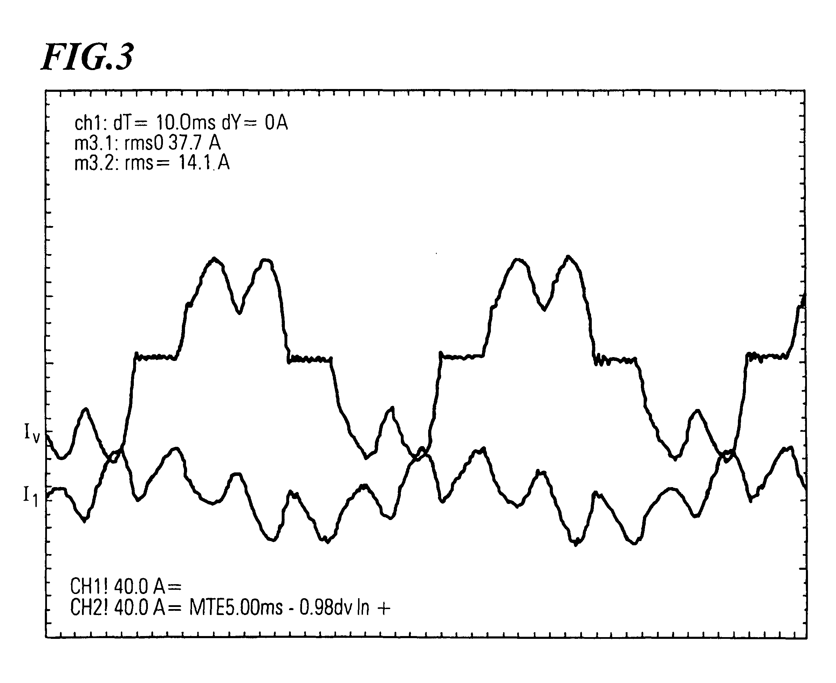

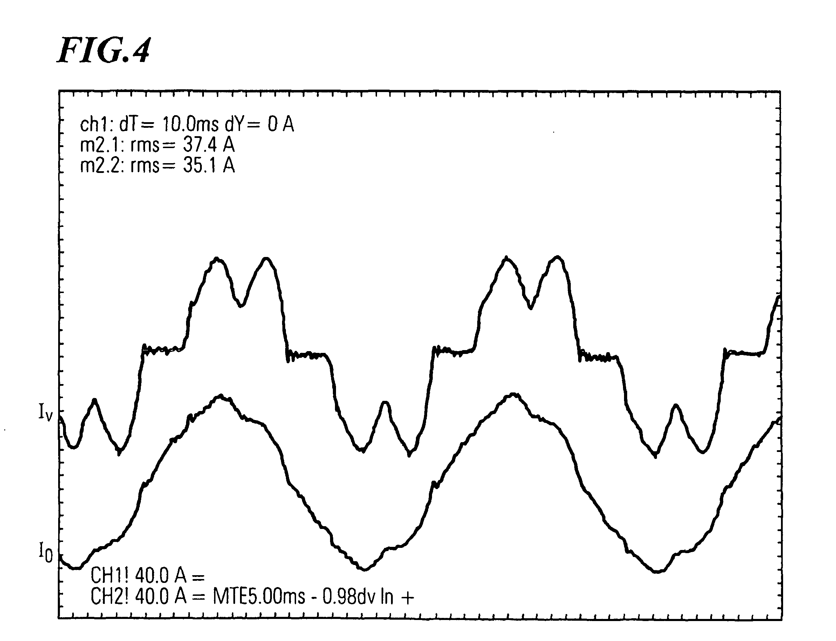

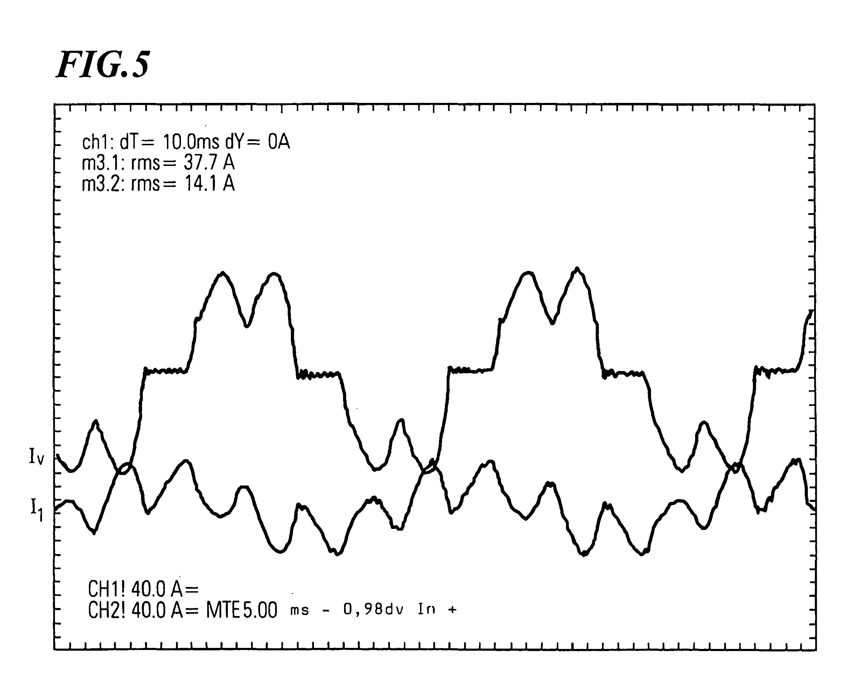

Mit der aus Fig. 1 ersichtlichen und oben beschriebenen bevorzugten Ausführungsform einer erfindungsgemäßen Schaltungsanordnung 10 wurden Versuche unternommen und die aus den Fig. 2 bis 5 ersichtlichen Ergebnisse erzielt. Wie man anhand der Oszillogramme der Fig. 2 bis 5 entnehmen kann, hat der Netzstrom einen THD = 9%, der Effektivwert des Netzstromes $I_0$ ist gleich dem Effektivwert des Verbraucherstromes $I_V$, der Effektivwert des Reaktanzzweipolstromes $I_1$ beträgt (0,4 · Effektivwert) des Netzstromes im Maximum und der Netzstrom hat einen cos phi = 1.

Ohne Reaktanzzweipolströme $I_1$ ist der Verbraucherstrom cos phi = 0,95.

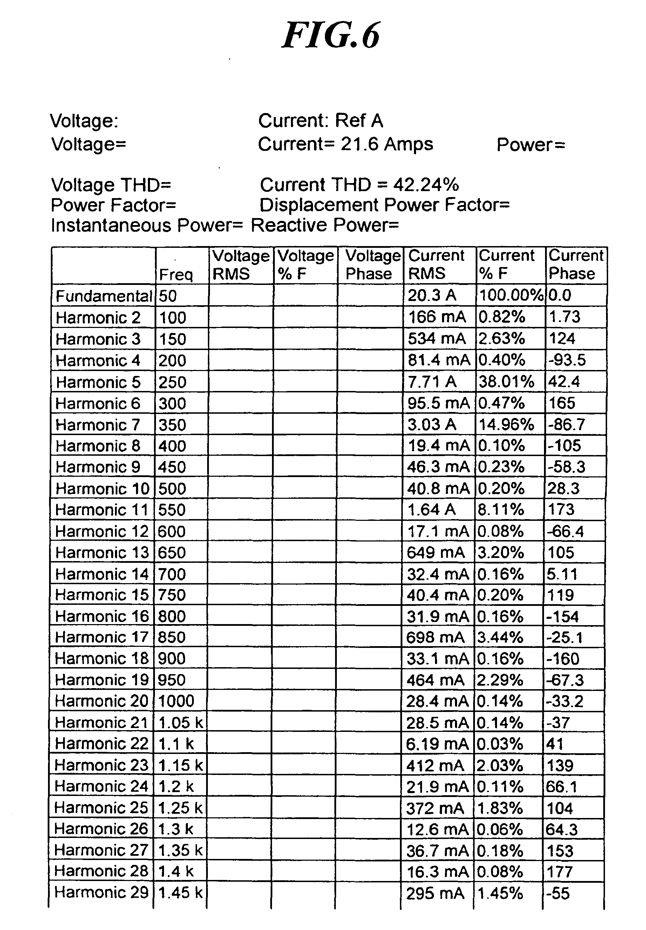

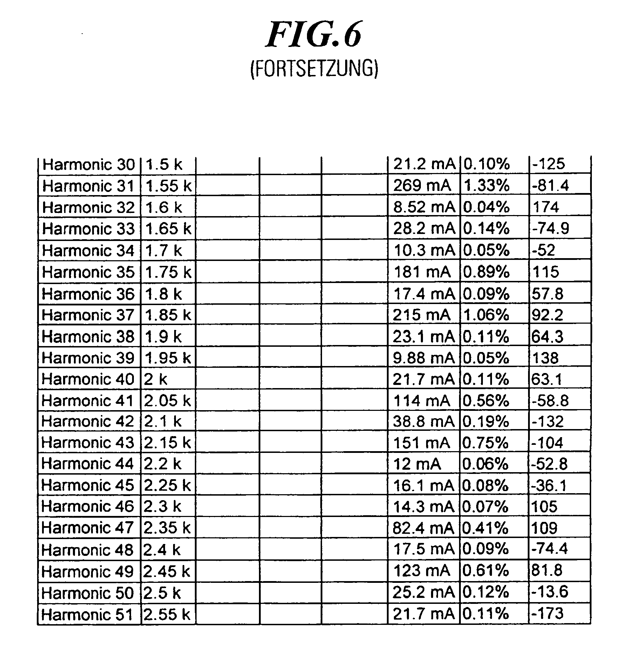

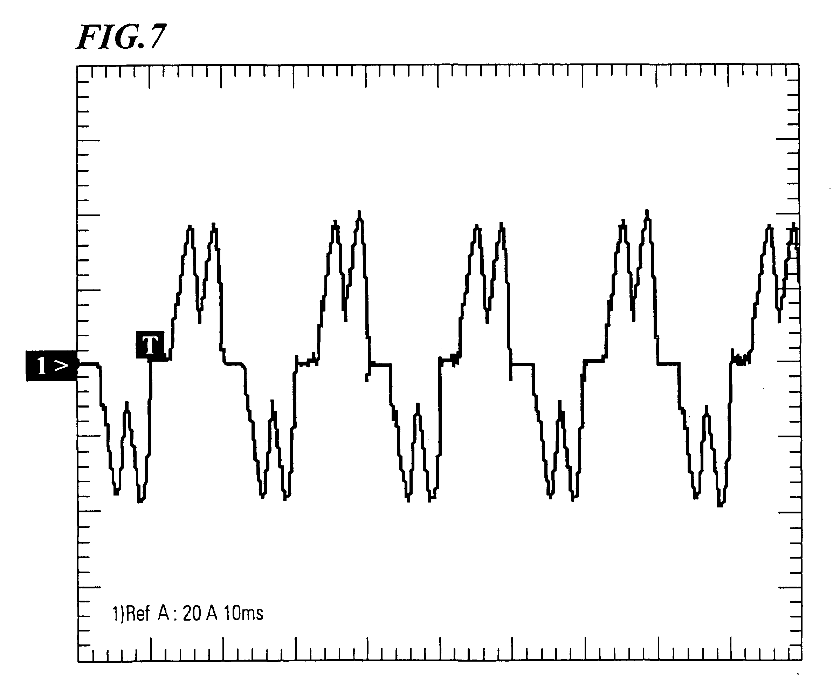

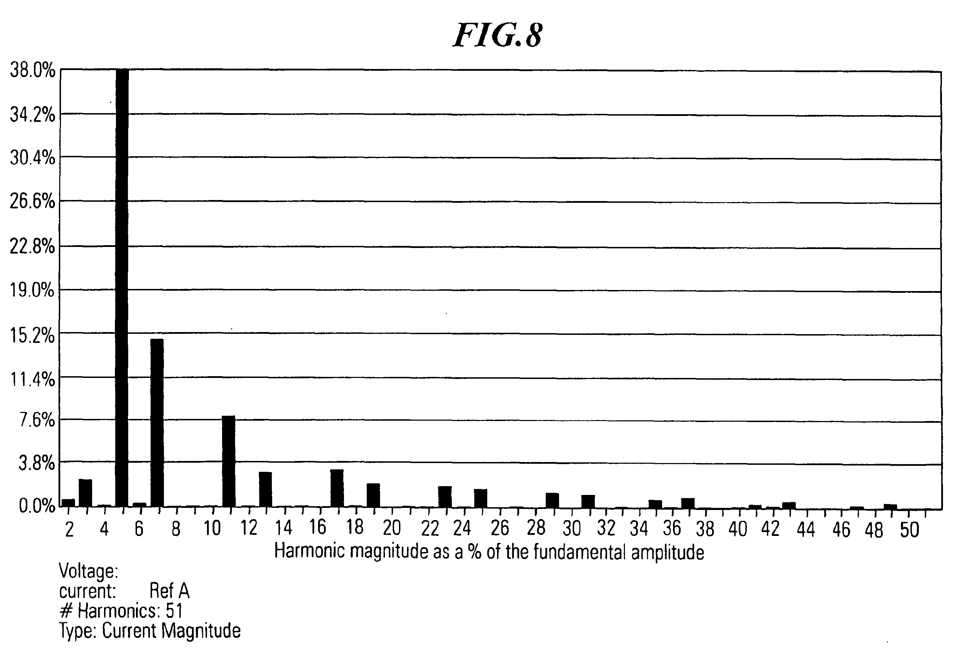

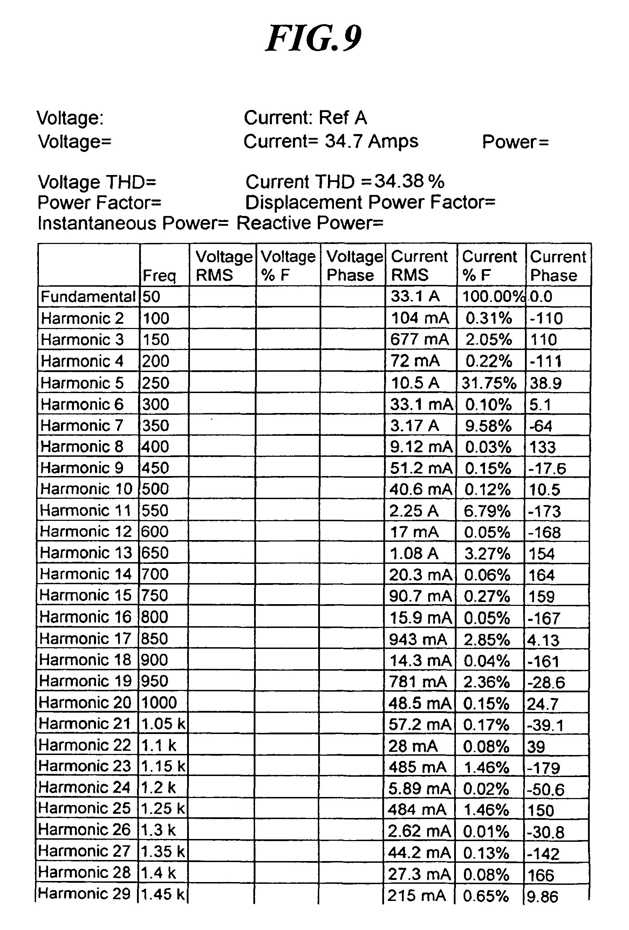

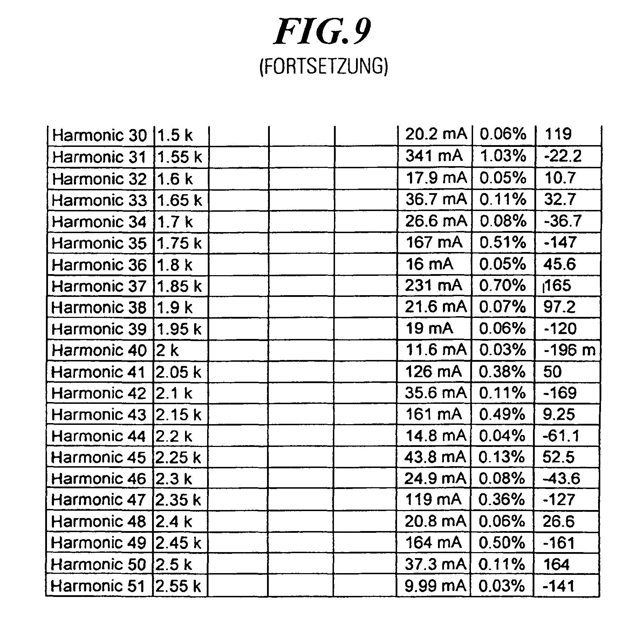

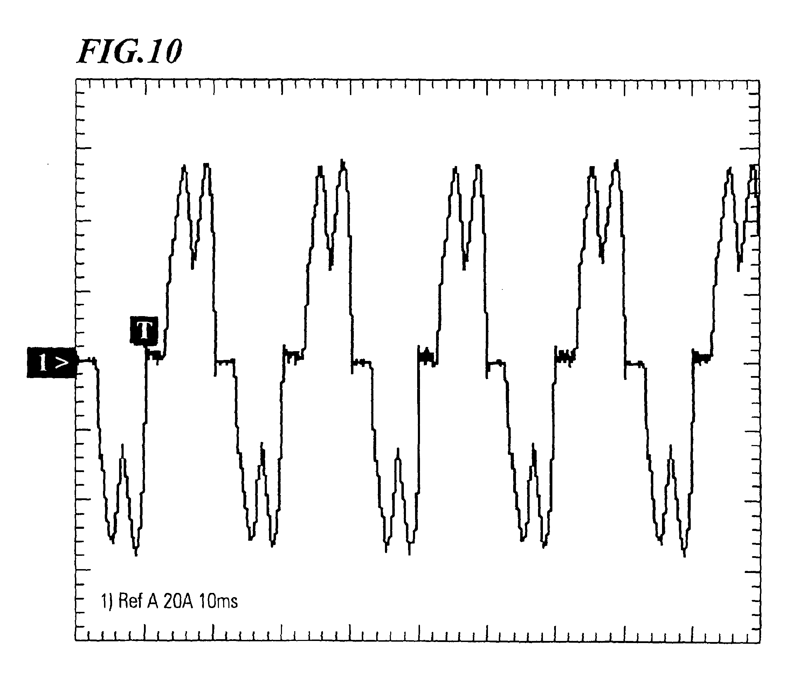

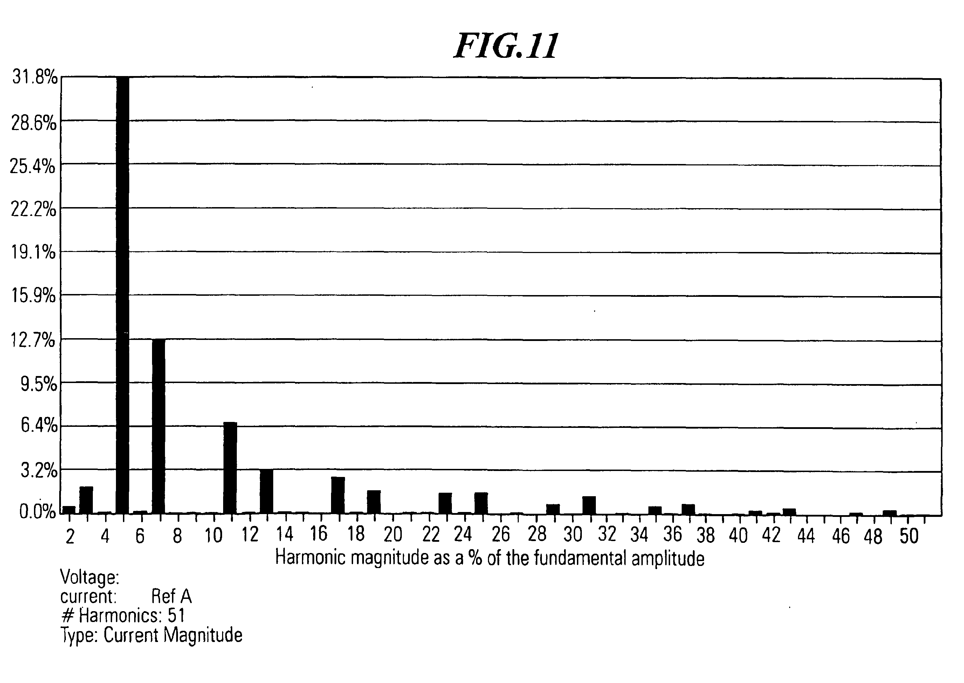

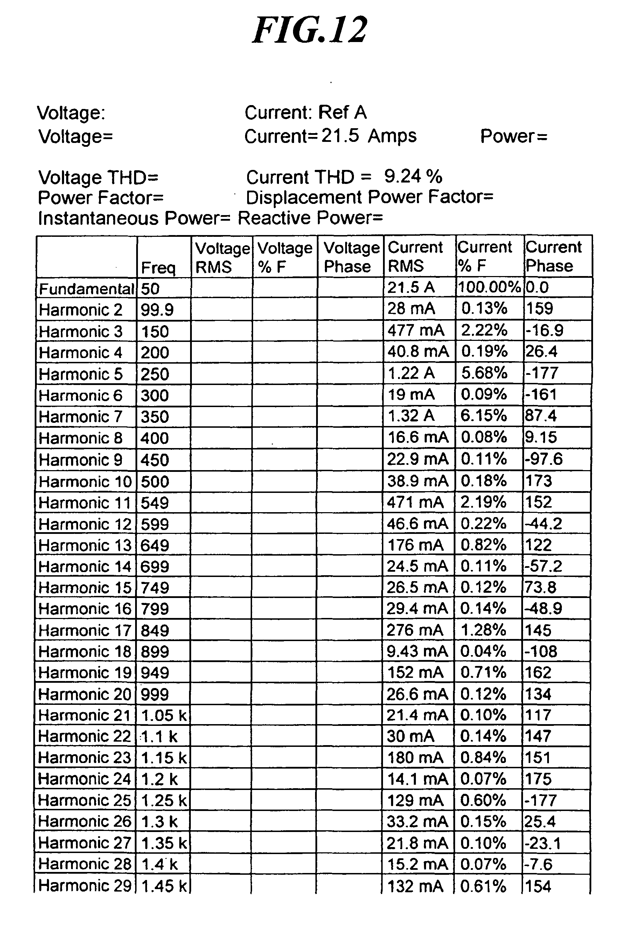

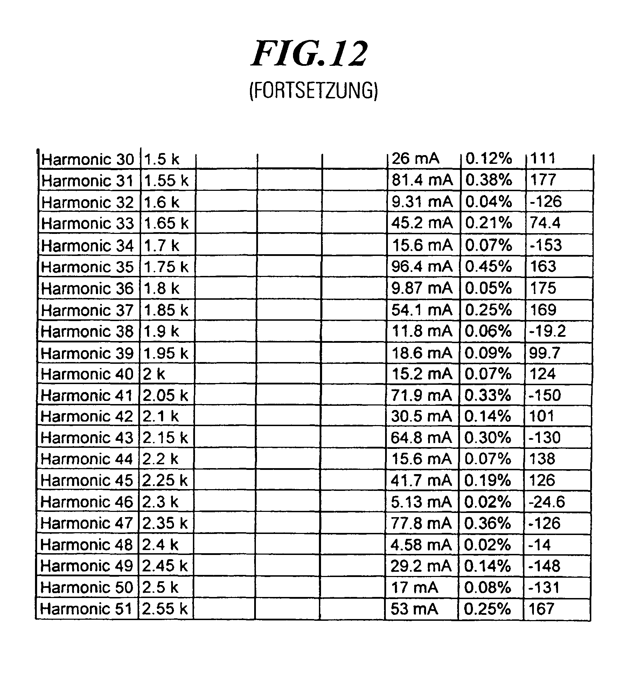

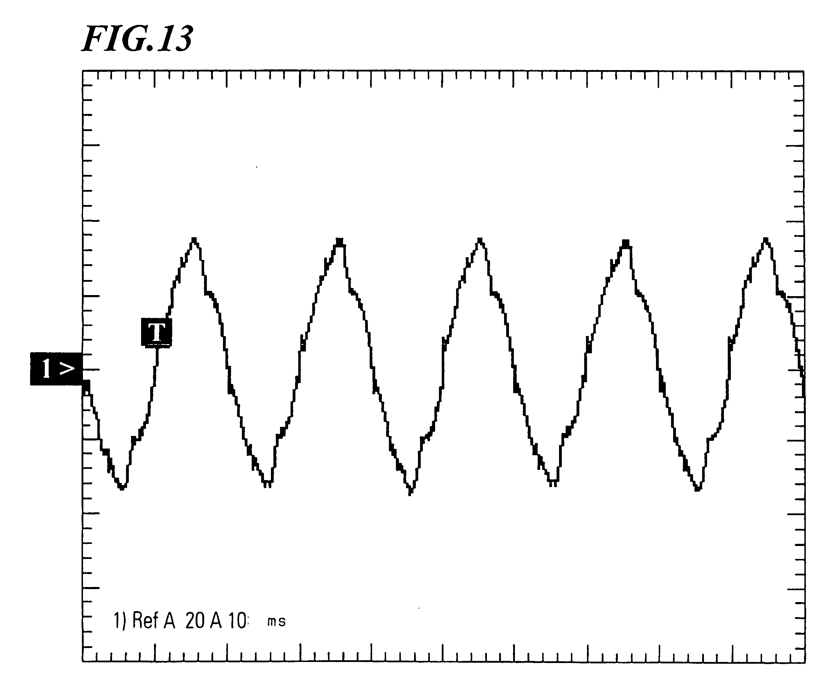

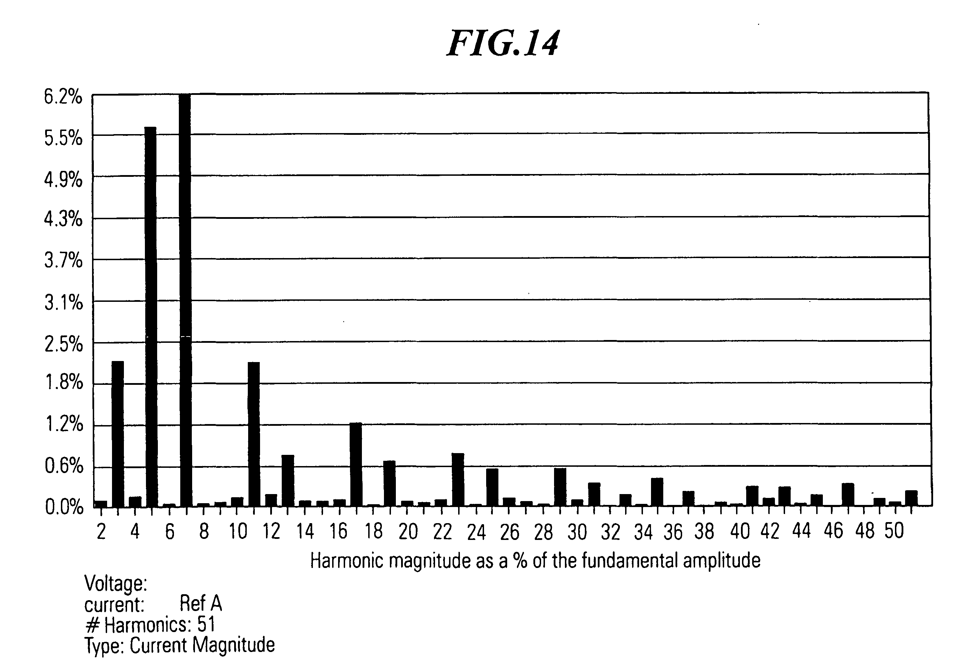

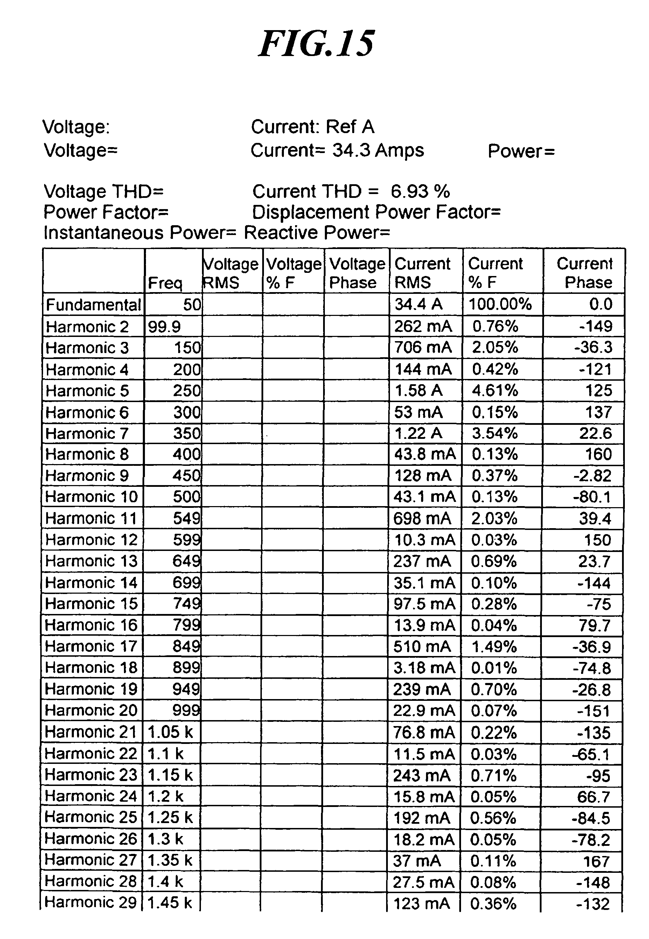

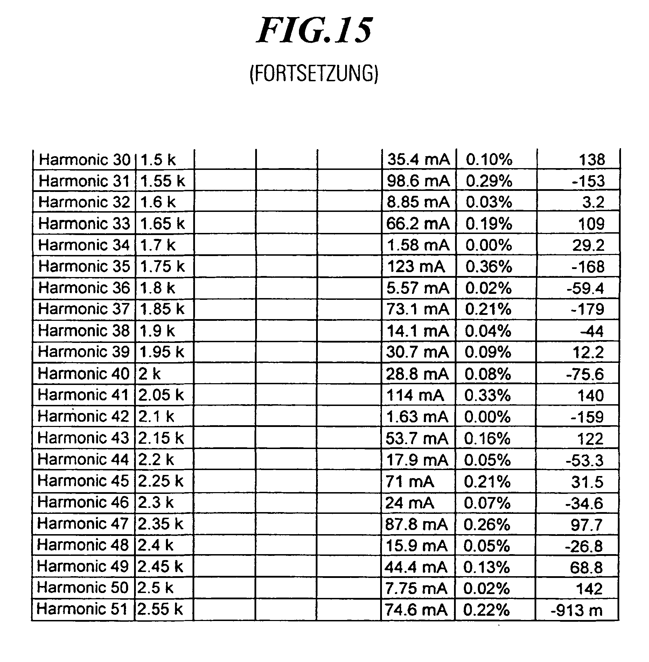

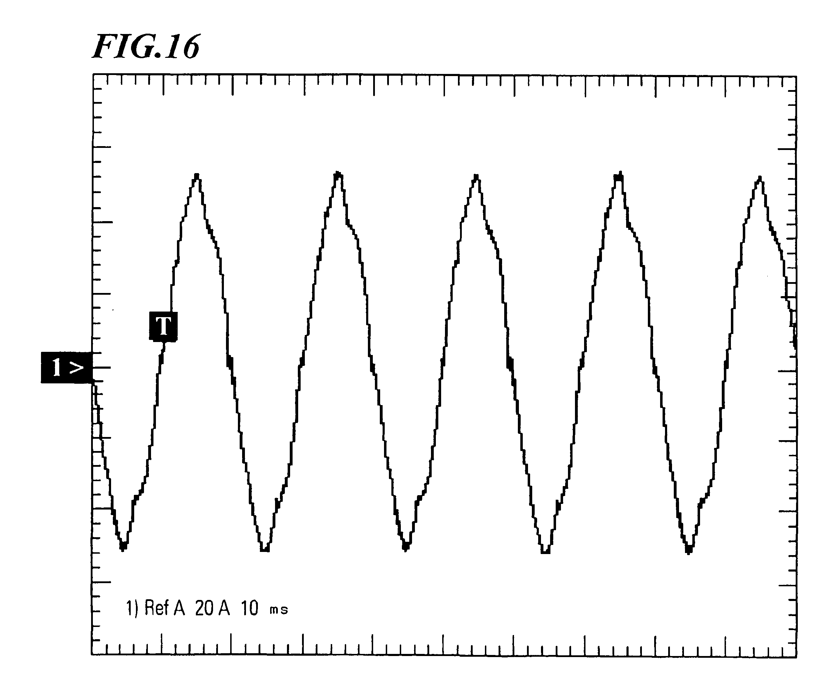

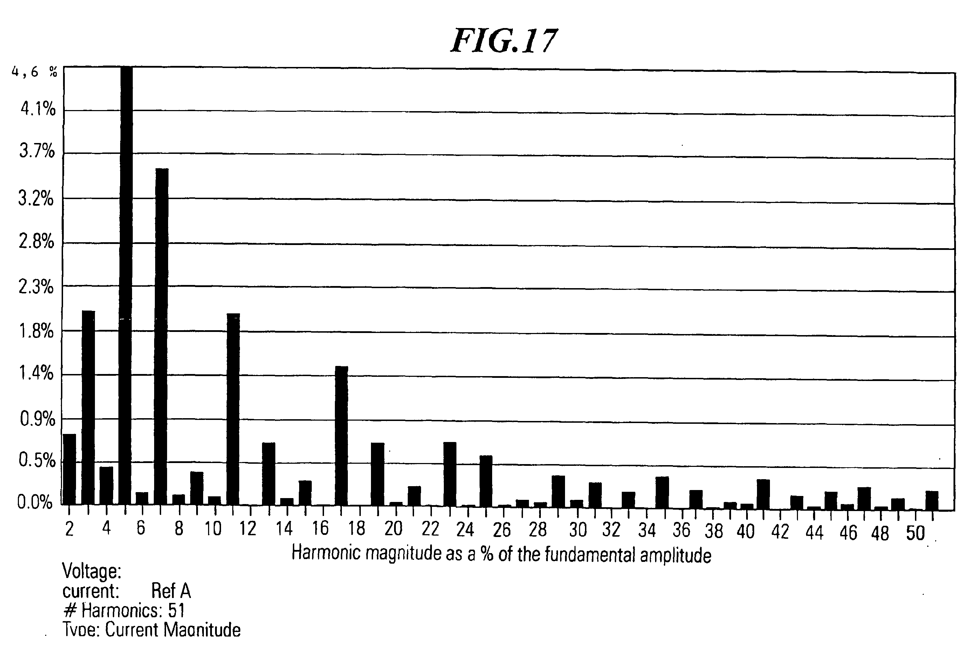

Die Versuchsergebnisse und Oszillogramme der Fig. 6 bis 17 stellen Oberschwingungsspektren der ungesteuerten B6-Gleichrichterschaltung mit erfindungsgemä-ßer Schaltungsanordnung (Fig. 12 bis 17) und zum Vergleich ohne die Schaltungsanordnung (Fig. 6 bis 11) dar. Hierbei veranschaulichen die Fig. 6 bis 8 und 12 bis 14 vergleichend Teillastbedingungen. Dagegen veranschaulichen die Fig. 9 bis 11 sowie 15 bis 17 Vollastbedingungen. Es ist unmittelbar offensichtlich, dass der Oberschwingungsanteil durch die Anwendung der erfindungsgemäßen Schaltungsanordnung 10 erheblich reduziert ist. Die Reduktion der Oberschwingungen ist für eine geräteseitige Kompensation mit lediglich passiven Bauteilen überraschend deutlich und stark ausgeprägt.

Die eingangs genannten Gleichrichter und Wechselrichter werden beispielsweise in Frequenzumrichtern, USV-Anlagen, Batterieladegeräten, Netzteilen, Gleichspannungsversorgungen, Stromrichtern, Gleichstromantrieben, Servoantrieben u.v.m. eingesetzt.

## Patentansprüche

1. Schaltungsanordnung zur Oberschwingungskompensation für nichtlineare Verbraucher (12), insbesondere Gleichrichter oder Wechselrichter, an wenigstens zweiphasigen, insbesondere dreiphasigen Versorgungsnetzen (14) mit sinusförmiger Netzspannung, wobei jede Phase (16, 18, 20) mit nur einem der Enden (40), einer ersten Induktivität (24) verbunden ist, jede erste Induktivität (24) mit ihrem von der jeweiligen Phase (16, 18, 20) abgewandten Ende wiederum mit einer ersten Kapazität (26) verbunden ist, alle ersten Kapazitäten (26) an ihren jeweiligen von den ersten Induktivitäten (24) abgewandten Enden (32) miteinander verbunden sind,
   **dadurch gekennzeichnet,**
   **dass** die ersten Induktivitäten (24) zwei in Reihe geschaltete Drosselspulen (28, 30) aufweisen und dass zwischen den beiden Drosselspulen (28, 30) jeder Phase (16, 18, 20) jeweils eine zweite Kapazität (34) angeschlossen ist, wobei die jeweiligen von den Drosselspulen (28, 30) abgewandten Enden (36) der zweiten Kapazitäten (34) miteinander verbunden sind.

2. Schaltungsanordnung nach Anspruch 1, **dadurch gekennzeichnet, dass** je n Drosselspulen (28, 30, 38) verschiedener Phasen (16, 18, 20) zu einer n-phasigen Eisenkerndrossel mit E-I-Kernschnitt zusammengefaßt sind, wobei n der Zahl der Phasen (16, 18, 20) entspricht.

3. Schaltungsanordnung nach wenigstens einem der vorhergehenden Ansprüche, **dadurch gekennzeichnet, daß** in jeder Phase (16, 18, 20) eine Drosselspule (38) vor dem Verbraucher (12) eingeschleift ist, wobei die ersten Induktivitäten (24 bzw. 28) jeweils zwischen der Drosselspule (38) und dem Verbraucher (12) mit der jeweiligen Phase (16, 18, 20) verbunden sind.

4. Schaltungsanordnung nach Anspruch 3, **dadurch gekennzeichnet, daß** der Verbraucher (12) ein gesteuerter oder ungesteuerte Wechselrichter ist oder ein gesteuerter oder ungesteuerte einphasiger Gleichrichter ist, insbesondere ein B2-Gleichrichter, ein gesteuerter oder ungesteuerte dreiphasiger Gleichrichter, insbesondere ein M6-, M3 oder B6-Gleichrichter, ein gesteuerter oder ungesteuerter höherphasiger Gleichrichter, insbesondere ein M12-, M18-, B12-Gleichrichter.

5. Schaltungsanordnung nach Anspruch 5 oder 6, **dadurch gekennzeichnet, daß** die Drosselspulen (38) zu einer n-phasigen Eisenkerndrossel mit E-I-Kernschnitt zusammengefaßt sind, wobei n der Zahl der Phasen (16, 18, 20) entspricht.

6. Schaltungsanordnung nach wenigstens einem der vorhergehenden Ansprüche, **dadurch gekennzeichnet, daß** dem Verbraucher (12) ein Siebkondensator (42) nachgeschaltet ist.

7. Schaltungsanordnung nach wenigstens einem der vorhergehenden Ansprüche, **dadurch gekennzeichnet, daß** die ersten Induktivitäten (24) als wenigstens eine n-phasige Eisenkerndrossel mit E-I-Kernschnitt ausgebildet sind, wobei n der Zahl der Phasen entspricht.

## Claims

1. Circuit arrangement for compensation of harmonic oscillations in nonlinear loads (12), in particular rectifiers or inverters in at least two-phase and particularly three-phase supply networks (14) with a sinusoidal supply voltage, whereby each phase is connected to one of the ends (40) of a first inductor (24), each first inductor (24) is in turn connected with its end facing away from the respective phase (16, 18, 20) to a first capacitor (26), all the first capacitors (26) are connected to each other at their respective ends (32) facing away from the first inductors (24), **characterised in that** the first inductors (24) have two choke coils (28, 30) connected in series and that a second capacitor (34) is connected between the two choke coils (28, 30) for each phase (16, 18, 20), whereby the respective ends (36) of the second capacitors (34) facing away from the choke coils (28, 30) are connected to each other.

2.  Circuit arrangement according to claim 1, **characterised in that** for each n choke coils (28, 30, 38), different phases (16, 18, 20) are brought together into an n-phase iron-cored choke with an EI core cross-section, wherein n is the number of phases (16, 18, 20).

3.  Circuit arrangement according to at least one of the preceding claims, **characterised in that** in each phase (16, 18, 20), a choke coil (38) is connected in series before the load (12), wherein the first inductors (24 and 28) are each connected to the respective phase (16, 18, 20) between the choke coil (38) and the load (12).

4.  Circuit arrangement according to claim 3, **characterised in that** the load (12) is a controlled or, uncontrolled inverter or a controlled or uncontrolled single-phase rectifier, in particular a B2 rectifier, a controlled or uncontrolled three-phase rectifier, in particular an M6, M3 or B6 rectifier, a controlled or uncontrolled higher-phase rectifier, in particular an M12, M18 or B12 rectifier.

5.  Circuit arrangement according to claim 5 or 6, **characterised in that** the choke coils (38) are brought together into an n-phase iron-cored choke with an EI core cross-section, wherein n is the number of phases (16, 18, 20).

6.  Circuit arrangement according to at least one of the preceding claims, **characterised in that** a filter capacitor (42) is connected after the load (12).

7.  Circuit arrangement according to at least one of the preceding claims, **characterised in that** the first inductors (24) are designed as at least one n-phased iron-cored choke with an EI core cross-section, wherein n is the number of phases.

**Revendications**

1.  Agencement de circuit pour la compensation d'oscillations harmoniques pour des récepteurs (12) non linéaires, en particulier pour des redresseurs ou des onduleurs sur des réseaux d'alimentation (14) au moins à deux phases, en particulier à trois phases avec tension de réseau sinusoïdale, chaque phase (16, 18, 20) n'étant reliée qu'à une des extrémités (40) d'une première inductance (24), chaque première inductance (24) étant à son tour reliée à une première capacité (26) par son extrémité détournée de la phase respective (16, 18, 20), et toutes les premières capacités (26) sont reliées les unes aux autres à leurs extrémités respectives (32) détournées des premières inductances (24),
    **caractérisé en ce que**
    les premières inductances (24) présentent deux bobines de réactance (28, 30) montées en série et **en ce qu'**entre les deux bobines de réactance (28, 30) de chaque phase (16, 18, 20) est branchée une deuxième capacité respective (34), les extrémités respectives (36), détournées des bobines de réactance (28, 30), des deuxièmes capacités (34) étant reliées les unes aux autres.

2.  Agencement de circuit selon la revendication 1, **caractérisé en ce que** n bobines de réactance respectives (28, 30, 38) de différentes phases (16, 18, 20) sont regroupées pour former une bobine à noyau de fer à n phases avec coupe de noyau E-I, n correspondant au nombre de phases (16, 18, 20).

3.  Agencement de circuit selon au moins l'une des revendications précédentes, **caractérisé en ce que** dans chaque phase (16, 18, 20), une bobine de réactance (38) est bouclée en amont du récepteur (12), les premières inductances (24, 28) étant chacune reliées à la phase respective (16, 18, 20) entre la bobine d'inductance (38) et le récepteur (12).

4.  Agencement de circuit selon la revendication 3, **caractérisé en ce que** le récepteur (12) est un onduleur commandé ou non commandé ou un redresseur commandé ou non commandé à phase unique, en particulier un redresseur B2, un onduleur à trois phases commandé ou non commandé, en particulier un redresseur M6, M3 ou B6, un redresseur à plus grand nombre de phases commandé ou non commandé, en particulier un redresseur M12, M18, B 12.

**5.** Agencement de circuit selon la revendication 3 ou 4, **caractérisé en ce que** les bobines de réactance (38) sont regroupées pour former une bobine à noyau de fer à n-phases avec une coupe de noyau E-I, n correspondant au nombre de phases (16, 18, 20).

**6.** Agencement de circuit selon au moins l'une des caractéristiques précédentes, **caractérisé en ce qu'**un condensateur de filtrage (42) est monté en aval du récepteur (12).

**7.** Agencement de circuit selon au moins l'une des caractéristiques précédentes, **caractérisé en ce que** les premières inductions (24) sont réalisées sous forme d'au moins une bobine à noyau de fer à n-phases avec une coupe de noyau E-I, n correspondant au nombre de phases.

# FIG.1

## FIG.2

ch1: dT = 10.0ms dY = 0A
m2.1: rms = 37.4 A
m2.2: rms = 35.1 A

$I_V$

$I_0$

CH1! 40.0 A=
CH2! 40.0 A= MTE5.00ms - 0.98dv In +

## FIG.3

ch1: dT = 10.0ms dY = 0A
m3.1: rms0 37.7 A
m3.2: rms = 14.1 A

$I_v$

$I_1$

CH1! 40.0 A =
CH2! 40.0 A = MTE5.00ms - 0.98dv In +

EP 1 248 344 B1

*FIG.4*

ch1: dT = 10.0ms dY = 0 A
m2.1: rms = 37.4 A
m2.2: rms = 35.1 A

$I_V$

$I_0$

CH1! 40.0 A =
CH2! 40.0 A = MTE5.00ms - 0.98dv In +

EP 1 248 344 B1

# FIG.5

ch1: dT= 10.0ms dY= 0A
m3.1: rms= 37.7 A
m3.2: rms= 14.1 A

$I_v$

$I_1$

CH1! 40.0 A=
CH2! 40.0 A= MTE 5.00 ms - 0,98dv In +

EP 1 248 344 B1

# *FIG.6*

Voltage:                    Current: Ref A

Voltage=                    Current= 21.6 Amps        Power=

Voltage THD=               Current THD = 42.24%

Power Factor=              Displacement Power Factor=

Instantaneous Power=      Reactive Power=

| | Freq | Voltage RMS | Voltage % F | Voltage Phase | Current RMS | Current % F | Current Phase |
|---|---|---|---|---|---|---|---|
| Fundamental | 50 | | | | 20.3 A | 100.00% | 0.0 |
| Harmonic 2 | 100 | | | | 166 mA | 0.82% | 1.73 |
| Harmonic 3 | 150 | | | | 534 mA | 2.63% | 124 |
| Harmonic 4 | 200 | | | | 81.4 mA | 0.40% | -93.5 |
| Harmonic 5 | 250 | | | | 7.71 A | 38.01% | 42.4 |
| Harmonic 6 | 300 | | | | 95.5 mA | 0.47% | 165 |
| Harmonic 7 | 350 | | | | 3.03 A | 14.96% | -86.7 |
| Harmonic 8 | 400 | | | | 19.4 mA | 0.10% | -105 |
| Harmonic 9 | 450 | | | | 46.3 mA | 0.23% | -58.3 |
| Harmonic 10 | 500 | | | | 40.8 mA | 0.20% | 28.3 |
| Harmonic 11 | 550 | | | | 1.64 A | 8.11% | 173 |
| Harmonic 12 | 600 | | | | 17.1 mA | 0.08% | -66.4 |
| Harmonic 13 | 650 | | | | 649 mA | 3.20% | 105 |
| Harmonic 14 | 700 | | | | 32.4 mA | 0.16% | 5.11 |
| Harmonic 15 | 750 | | | | 40.4 mA | 0.20% | 119 |
| Harmonic 16 | 800 | | | | 31.9 mA | 0.16% | -154 |
| Harmonic 17 | 850 | | | | 698 mA | 3.44% | -25.1 |
| Harmonic 18 | 900 | | | | 33.1 mA | 0.16% | -160 |
| Harmonic 19 | 950 | | | | 464 mA | 2.29% | -67.3 |
| Harmonic 20 | 1000 | | | | 28.4 mA | 0.14% | -33.2 |
| Harmonic 21 | 1.05 k | | | | 28.5 mA | 0.14% | -37 |
| Harmonic 22 | 1.1 k | | | | 6.19 mA | 0.03% | 41 |
| Harmonic 23 | 1.15 k | | | | 412 mA | 2.03% | 139 |
| Harmonic 24 | 1.2 k | | | | 21.9 mA | 0.11% | 66.1 |
| Harmonic 25 | 1.25 k | | | | 372 mA | 1.83% | 104 |
| Harmonic 26 | 1.3 k | | | | 12.6 mA | 0.06% | 64.3 |
| Harmonic 27 | 1.35 k | | | | 36.7 mA | 0.18% | 153 |
| Harmonic 28 | 1.4 k | | | | 16.3 mA | 0.08% | 177 |
| Harmonic 29 | 1.45 k | | | | 295 mA | 1.45% | -55 |

# FIG.6

## (FORTSETZUNG)

| | | | | | | | |
|---|---|---|---|---|---|---|---|
| Harmonic 30 | 1.5 k | | | | 21.2 mA | 0.10% | -125 |
| Harmonic 31 | 1.55 k | | | | 269 mA | 1.33% | -81.4 |
| Harmonic 32 | 1.6 k | | | | 8.52 mA | 0.04% | 174 |
| Harmonic 33 | 1.65 k | | | | 28.2 mA | 0.14% | -74.9 |
| Harmonic 34 | 1.7 k | | | | 10.3 mA | 0.05% | -52 |
| Harmonic 35 | 1.75 k | | | | 181 mA | 0.89% | 115 |
| Harmonic 36 | 1.8 k | | | | 17.4 mA | 0.09% | 57.8 |
| Harmonic 37 | 1.85 k | | | | 215 mA | 1.06% | 92.2 |
| Harmonic 38 | 1.9 k | | | | 23.1 mA | 0.11% | 64.3 |
| Harmonic 39 | 1.95 k | | | | 9.88 mA | 0.05% | 138 |
| Harmonic 40 | 2 k | | | | 21.7 mA | 0.11% | 63.1 |
| Harmonic 41 | 2.05 k | | | | 114 mA | 0.56% | -58.8 |
| Harmonic 42 | 2.1 k | | | | 38.8 mA | 0.19% | -132 |
| Harmonic 43 | 2.15 k | | | | 151 mA | 0.75% | -104 |
| Harmonic 44 | 2.2 k | | | | 12 mA | 0.06% | -52.8 |
| Harmonic 45 | 2.25 k | | | | 16.1 mA | 0.08% | -36.1 |
| Harmonic 46 | 2.3 k | | | | 14.3 mA | 0.07% | 105 |
| Harmonic 47 | 2.35 k | | | | 82.4 mA | 0.41% | 109 |
| Harmonic 48 | 2.4 k | | | | 17.5 mA | 0.09% | -74.4 |
| Harmonic 49 | 2.45 k | | | | 123 mA | 0.61% | 81.8 |
| Harmonic 50 | 2.5 k | | | | 25.2 mA | 0.12% | -13.6 |
| Harmonic 51 | 2.55 k | | | | 21.7 mA | 0.11% | -173 |

FIG.7

1)Ref A : 20 A 10ms

## FIG.8

Harmonic magnitude as a % of the fundamental amplitude

Voltage:
current:      Ref A
# Harmonics: 51
Type: Current Magnitude

EP 1 248 344 B1

# FIG.9

Voltage:               Current: Ref A

Voltage=              Current= 34.7 Amps     Power=

Voltage THD=        Current THD =34.38 %

Power Factor=       Displacement Power Factor=

Instantaneous Power= Reactive Power=

|  | Freq | Voltage RMS | Voltage % F | Voltage Phase | Current RMS | Current % F | Current Phase |
|---|---|---|---|---|---|---|---|
| Fundamental | 50 |  |  |  | 33.1 A | 100.00% | 0.0 |
| Harmonic 2 | 100 |  |  |  | 104 mA | 0.31% | -110 |
| Harmonic 3 | 150 |  |  |  | 677 mA | 2.05% | 110 |
| Harmonic 4 | 200 |  |  |  | 72 mA | 0.22% | -111 |
| Harmonic 5 | 250 |  |  |  | 10.5 A | 31.75% | 38.9 |
| Harmonic 6 | 300 |  |  |  | 33.1 mA | 0.10% | 5.1 |
| Harmonic 7 | 350 |  |  |  | 3.17 A | 9.58% | -64 |
| Harmonic 8 | 400 |  |  |  | 9.12 mA | 0.03% | 133 |
| Harmonic 9 | 450 |  |  |  | 51.2 mA | 0.15% | -17.6 |
| Harmonic 10 | 500 |  |  |  | 40.6 mA | 0.12% | 10.5 |
| Harmonic 11 | 550 |  |  |  | 2.25 A | 6.79% | -173 |
| Harmonic 12 | 600 |  |  |  | 17 mA | 0.05% | -168 |
| Harmonic 13 | 650 |  |  |  | 1.08 A | 3.27% | 154 |
| Harmonic 14 | 700 |  |  |  | 20.3 mA | 0.06% | 164 |
| Harmonic 15 | 750 |  |  |  | 90.7 mA | 0.27% | 159 |
| Harmonic 16 | 800 |  |  |  | 15.9 mA | 0.05% | -167 |
| Harmonic 17 | 850 |  |  |  | 943 mA | 2.85% | 4.13 |
| Harmonic 18 | 900 |  |  |  | 14.3 mA | 0.04% | -161 |
| Harmonic 19 | 950 |  |  |  | 781 mA | 2.36% | -28.6 |
| Harmonic 20 | 1000 |  |  |  | 48.5 mA | 0.15% | 24.7 |
| Harmonic 21 | 1.05 k |  |  |  | 57.2 mA | 0.17% | -39.1 |
| Harmonic 22 | 1.1 k |  |  |  | 28 mA | 0.08% | 39 |
| Harmonic 23 | 1.15 k |  |  |  | 485 mA | 1.46% | -179 |
| Harmonic 24 | 1.2 k |  |  |  | 5.89 mA | 0.02% | -50.6 |
| Harmonic 25 | 1.25 k |  |  |  | 484 mA | 1.46% | 150 |
| Harmonic 26 | 1.3 k |  |  |  | 2.62 mA | 0.01% | -30.8 |
| Harmonic 27 | 1.35 k |  |  |  | 44.2 mA | 0.13% | -142 |
| Harmonic 28 | 1.4 k |  |  |  | 27.3 mA | 0.08% | 166 |
| Harmonic 29 | 1.45 k |  |  |  | 215 mA | 0.65% | 9.86 |

# FIG.9

(FORTSETZUNG)

| | | | | | | | |
|---|---|---|---|---|---|---|---|
| Harmonic 30 | 1.5 k | | | | 20.2 mA | 0.06% | 119 |
| Harmonic 31 | 1.55 k | | | | 341 mA | 1.03% | -22.2 |
| Harmonic 32 | 1.6 k | | | | 17.9 mA | 0.05% | 10.7 |
| Harmonic 33 | 1.65 k | | | | 36.7 mA | 0.11% | 32.7 |
| Harmonic 34 | 1.7 k | | | | 26.6 mA | 0.08% | -36.7 |
| Harmonic 35 | 1.75 k | | | | 167 mA | 0.51% | -147 |
| Harmonic 36 | 1.8 k | | | | 16 mA | 0.05% | 45.6 |
| Harmonic 37 | 1.85 k | | | | 231 mA | 0.70% | 165 |
| Harmonic 38 | 1.9 k | | | | 21.6 mA | 0.07% | 97.2 |
| Harmonic 39 | 1.95 k | | | | 19 mA | 0.06% | -120 |
| Harmonic 40 | 2 k | | | | 11.6 mA | 0.03% | -196 m |
| Harmonic 41 | 2.05 k | | | | 126 mA | 0.38% | 50 |
| Harmonic 42 | 2.1 k | | | | 35.6 mA | 0.11% | -169 |
| Harmonic 43 | 2.15 k | | | | 161 mA | 0.49% | 9.25 |
| Harmonic 44 | 2.2 k | | | | 14.8 mA | 0.04% | -61.1 |
| Harmonic 45 | 2.25 k | | | | 43.8 mA | 0.13% | 52.5 |
| Harmonic 46 | 2.3 k | | | | 24.9 mA | 0.08% | -43.6 |
| Harmonic 47 | 2.35 k | | | | 119 mA | 0.36% | -127 |
| Harmonic 48 | 2.4 k | | | | 20.8 mA | 0.06% | 26.6 |
| Harmonic 49 | 2.45 k | | | | 164 mA | 0.50% | -161 |
| Harmonic 50 | 2.5 k | | | | 37.3 mA | 0.11% | 164 |
| Harmonic 51 | 2.55 k | | | | 9.99 mA | 0.03% | -141 |

## FIG.11

Harmonic magnitude as a % of the fundamental amplitude

Voltage:
current:      Ref A
# Harmonics: 51
Type: Current Magnitude

EP 1 248 344 B1

# FIG.12

Voltage:    Current: Ref A

Voltage=    Current= 21.5 Amps   Power=

Voltage THD=   Current THD = 9.24 %

Power Factor=  · Displacement Power Factor=

Instantaneous Power= Reactive Power=

|  | Freq | Voltage RMS | Voltage % F | Voltage Phase | Current RMS | Current % F | Current Phase |
|---|---|---|---|---|---|---|---|
| Fundamental | 50 |  |  |  | 21.5 A | 100.00% | 0.0 |
| Harmonic 2 | 99.9 |  |  |  | 28 mA | 0.13% | 159 |
| Harmonic 3 | 150 |  |  |  | 477 mA | 2.22% | -16.9 |
| Harmonic 4 | 200 |  |  |  | 40.8 mA | 0.19% | 26.4 |
| Harmonic 5 | 250 |  |  |  | 1.22 A | 5.68% | -177 |
| Harmonic 6 | 300 |  |  |  | 19 mA | 0.09% | -161 |
| Harmonic 7 | 350 |  |  |  | 1.32 A | 6.15% | 87.4 |
| Harmonic 8 | 400 |  |  |  | 16.6 mA | 0.08% | 9.15 |
| Harmonic 9 | 450 |  |  |  | 22.9 mA | 0.11% | -97.6 |
| Harmonic 10 | 500 |  |  |  | 38.9 mA | 0.18% | 173 |
| Harmonic 11 | 549 |  |  |  | 471 mA | 2.19% | 152 |
| Harmonic 12 | 599 |  |  |  | 46.6 mA | 0.22% | -44.2 |
| Harmonic 13 | 649 |  |  |  | 176 mA | 0.82% | 122 |
| Harmonic 14 | 699 |  |  |  | 24.5 mA | 0.11% | -57.2 |
| Harmonic 15 | 749 |  |  |  | 26.5 mA | 0.12% | 73.8 |
| Harmonic 16 | 799 |  |  |  | 29.4 mA | 0.14% | -48.9 |
| Harmonic 17 | 849 |  |  |  | 276 mA | 1.28% | 145 |
| Harmonic 18 | 899 |  |  |  | 9.43 mA | 0.04% | -108 |
| Harmonic 19 | 949 |  |  |  | 152 mA | 0.71% | 162 |
| Harmonic 20 | 999 |  |  |  | 26.6 mA | 0.12% | 134 |
| Harmonic 21 | 1.05 k |  |  |  | 21.4 mA | 0.10% | 117 |
| Harmonic 22 | 1.1 k |  |  |  | 30 mA | 0.14% | 147 |
| Harmonic 23 | 1.15 k |  |  |  | 180 mA | 0.84% | 151 |
| Harmonic 24 | 1.2 k |  |  |  | 14.1 mA | 0.07% | 175 |
| Harmonic 25 | 1.25 k |  |  |  | 129 mA | 0.60% | -177 |
| Harmonic 26 | 1.3 k |  |  |  | 33.2 mA | 0.15% | 25.4 |
| Harmonic 27 | 1.35 k |  |  |  | 21.8 mA | 0.10% | -23.1 |
| Harmonic 28 | 1.4 k |  |  |  | 15.2 mA | 0.07% | -7.6 |
| Harmonic 29 | 1.45 k |  |  |  | 132 mA | 0.61% | 154 |

# FIG.12

(FORTSETZUNG)

| | | | | | | | |
|---|---|---|---|---|---|---|---|
| Harmonic 30 | 1.5 k | | | | 26 mA | 0.12% | 111 |
| Harmonic 31 | 1.55 k | | | | 81.4 mA | 0.38% | 177 |
| Harmonic 32 | 1.6 k | | | | 9.31 mA | 0.04% | -126 |
| Harmonic 33 | 1.65 k | | | | 45.2 mA | 0.21% | 74.4 |
| Harmonic 34 | 1.7 k | | | | 15.6 mA | 0.07% | -153 |
| Harmonic 35 | 1.75 k | | | | 96.4 mA | 0.45% | 163 |
| Harmonic 36 | 1.8 k | | | | 9.87 mA | 0.05% | 175 |
| Harmonic 37 | 1.85 k | | | | 54.1 mA | 0.25% | 169 |
| Harmonic 38 | 1.9 k | | | | 11.8 mA | 0.06% | -19.2 |
| Harmonic 39 | 1.95 k | | | | 18.6 mA | 0.09% | 99.7 |
| Harmonic 40 | 2 k | | | | 15.2 mA | 0.07% | 124 |
| Harmonic 41 | 2.05 k | | | | 71.9 mA | 0.33% | -150 |
| Harmonic 42 | 2.1 k | | | | 30.5 mA | 0.14% | 101 |
| Harmonic 43 | 2.15 k | | | | 64.8 mA | 0.30% | -130 |
| Harmonic 44 | 2.2 k | | | | 15.6 mA | 0.07% | 138 |
| Harmonic 45 | 2.25 k | | | | 41.7 mA | 0.19% | 126 |
| Harmonic 46 | 2.3 k | | | | 5.13 mA | 0.02% | -24.6 |
| Harmonic 47 | 2.35 k | | | | 77.8 mA | 0.36% | -126 |
| Harmonic 48 | 2.4 k | | | | 4.58 mA | 0.02% | -14 |
| Harmonic 49 | 2.45 k | | | | 29.2 mA | 0.14% | -148 |
| Harmonic 50 | 2.5 k | | | | 17 mA | 0.08% | -131 |
| Harmonic 51 | 2.55 k | | | | 53 mA | 0.25% | 167 |

FIG.13

FIG.14

EP 1 248 344 B1

# FIG.15

Voltage:                    Current: Ref A
Voltage=                    Current= 34.3 Amps          Power=

Voltage THD=                Current THD =  6.93 %
Power Factor=               Displacement Power Factor=
Instantaneous Power= Reactive Power=

| | Freq | Voltage RMS | Voltage % F | Voltage Phase | Current RMS | Current % F | Current Phase |
|---|---|---|---|---|---|---|---|
| Fundamental | 50 | | | | 34.4 A | 100.00% | 0.0 |
| Harmonic 2 | 99.9 | | | | 262 mA | 0.76% | -149 |
| Harmonic 3 | 150 | | | | 706 mA | 2.05% | -36.3 |
| Harmonic 4 | 200 | | | | 144 mA | 0.42% | -121 |
| Harmonic 5 | 250 | | | | 1.58 A | 4.61% | 125 |
| Harmonic 6 | 300 | | | | 53 mA | 0.15% | 137 |
| Harmonic 7 | 350 | | | | 1.22 A | 3.54% | 22.6 |
| Harmonic 8 | 400 | | | | 43.8 mA | 0.13% | 160 |
| Harmonic 9 | 450 | | | | 128 mA | 0.37% | -2.82 |
| Harmonic 10 | 500 | | | | 43.1 mA | 0.13% | -80.1 |
| Harmonic 11 | 549 | | | | 698 mA | 2.03% | 39.4 |
| Harmonic 12 | 599 | | | | 10.3 mA | 0.03% | 150 |
| Harmonic 13 | 649 | | | | 237 mA | 0.69% | 23.7 |
| Harmonic 14 | 699 | | | | 35.1 mA | 0.10% | -144 |
| Harmonic 15 | 749 | | | | 97.5 mA | 0.28% | -75 |
| Harmonic 16 | 799 | | | | 13.9 mA | 0.04% | 79.7 |
| Harmonic 17 | 849 | | | | 510 mA | 1.49% | -36.9 |
| Harmonic 18 | 899 | | | | 3.18 mA | 0.01% | -74.8 |
| Harmonic 19 | 949 | | | | 239 mA | 0.70% | -26.8 |
| Harmonic 20 | 999 | | | | 22.9 mA | 0.07% | -151 |
| Harmonic 21 | 1.05 k | | | | 76.8 mA | 0.22% | -135 |
| Harmonic 22 | 1.1 k | | | | 11.5 mA | 0.03% | -65.1 |
| Harmonic 23 | 1.15 k | | | | 243 mA | 0.71% | -95 |
| Harmonic 24 | 1.2 k | | | | 15.8 mA | 0.05% | 66.7 |
| Harmonic 25 | 1.25 k | | | | 192 mA | 0.56% | -84.5 |
| Harmonic 26 | 1.3 k | | | | 18.2 mA | 0.05% | -78.2 |
| Harmonic 27 | 1.35 k | | | | 37 mA | 0.11% | 167 |
| Harmonic 28 | 1.4 k | | | | 27.5 mA | 0.08% | -148 |
| Harmonic 29 | 1.45 k | | | | 123 mA | 0.36% | -132 |

25

# FIG.15

(FORTSETZUNG)

| | | | | | | | |
|---|---|---|---|---|---|---|---|
| Harmonic 30 | 1.5 k | | | | 35.4 mA | 0.10% | 138 |
| Harmonic 31 | 1.55 k | | | | 98.6 mA | 0.29% | -153 |
| Harmonic 32 | 1.6 k | | | | 8.85 mA | 0.03% | 3.2 |
| Harmonic 33 | 1.65 k | | | | 66.2 mA | 0.19% | 109 |
| Harmonic 34 | 1.7 k | | | | 1.58 mA | 0.00% | 29.2 |
| Harmonic 35 | 1.75 k | | | | 123 mA | 0.36% | -168 |
| Harmonic 36 | 1.8 k | | | | 5.57 mA | 0.02% | -59.4 |
| Harmonic 37 | 1.85 k | | | | 73.1 mA | 0.21% | -179 |
| Harmonic 38 | 1.9 k | | | | 14.1 mA | 0.04% | -44 |
| Harmonic 39 | 1.95 k | | | | 30.7 mA | 0.09% | 12.2 |
| Harmonic 40 | 2 k | | | | 28.8 mA | 0.08% | -75.6 |
| Harmonic 41 | 2.05 k | | | | 114 mA | 0.33% | 140 |
| Harmonic 42 | 2.1 k | | | | 1.63 mA | 0.00% | -159 |
| Harmonic 43 | 2.15 k | | | | 53.7 mA | 0.16% | 122 |
| Harmonic 44 | 2.2 k | | | | 17.9 mA | 0.05% | -53.3 |
| Harmonic 45 | 2.25 k | | | | 71 mA | 0.21% | 31.5 |
| Harmonic 46 | 2.3 k | | | | 24 mA | 0.07% | -34.6 |
| Harmonic 47 | 2.35 k | | | | 87.8 mA | 0.26% | 97.7 |
| Harmonic 48 | 2.4 k | | | | 15.9 mA | 0.05% | -26.8 |
| Harmonic 49 | 2.45 k | | | | 44.4 mA | 0.13% | 68.8 |
| Harmonic 50 | 2.5 k | | | | 7.75 mA | 0.02% | 142 |
| Harmonic 51 | 2.55 k | | | | 74.6 mA | 0.22% | -913 m |

FIG.16

1) Ref A 20 A 10 ms

EP 1 248 344 B1

## *FIG.17*

Harmonic magnitude as a % of the fundamental amplitude

Voltage:
current:     Ref A
# Harmonics: 51
Type: Current Magnitude